# EUROPÄISCHE PATENTSCHRIFT

(11) **EP 4 266 274 B1**
(45) Veröffentlichungstag und Bekanntmachung des Hinweises auf die Patenterteilung: **03.06.2026**
(21) Anmeldenummer: 23168716.1
(22) Anmeldetag: 19.04.2023
(51) Int. Cl.: G07D 9/00, B65G 17/08, B65G 17/32, B65G 17/46

(54) **FÖRDERVORRICHTUNG ZUM FÖRDERN VON MÜNZEN**
CONVEYOR DEVICE FOR CONVEYING COINS
DISPOSITIF DE TRANSPORT POUR LE TRANSPORT DE PIÈCES DE MONNAIE

(30) Priorität: 21.04.2022 DE 102022109634
(43) Veröffentlichungstag der Anmeldung: 25.10.2023
(73) Patentinhaber: Zitnik, Roman, 73037 Göppingen (DE)
(72) Erfinder: Zitnik, Roman, 73037 Göppingen (DE); Cohrs, Hans-Ulrich, 21640 Horneburg (DE)
(74) Vertreter: Hauck Patent- und Rechtsanwälte PartmbB

(56) Entgegenhaltungen:
- WO-A1-2018/141421
- DE-A1- 102010 025 249
- GB-A- 2 513 539
- US-A- 5 531 331
- US-A1- 2017 213 408

## Beschreibung

Die Erfindung betrifft eine Fördervorrichtung zum Fördern von Münzen von einem ersten Niveau auf ein zweites höheres Niveau, umfassend einen Münzeinlass auf dem ersten Niveau und einen Münzauslass auf dem zweiten Niveau, und umfassend einen durch einen Antrieb angetriebenen Endlosförderer zum Fördern von Münzen von dem Münzeinlass zu dem Münzauslass, wobei der Endlosförderer ein Kettengliedförderer mit einer Vielzahl von gelenkig miteinander verbundenen Kettengliedern ist.

Mit derartigen Fördervorrichtungen können Münzen von einem niedrigeren Niveau auf ein höheres Niveau gefördert werden. Dies kann beispielsweise in Bezahlautomaten oder Geldwechselautomaten oder auch in Geldspielautomaten erforderlich sein. Hierzu weisen solche Fördervorrichtungen einen Münzeinlass auf dem niedrigeren Niveau auf, über den die zu fördernden Münzen der Fördervorrichtung, insbesondere einem Endlos-Kettengliedförderer, zugeführt werden. Die Münzen werden von Kettengliedern des Endlos-Kettengliedförderers mitgenommen und auf das höhere Niveau gebracht, wo sie in der Regel schwerkraftbedingt von den Kettengliedern herabfallen in einen Münzauslass. Über den Münzauslass können die Münzen zum Beispiel ausgezahlt werden.

Bei Kettengliedförderern werden die Münzen in der Regel mechanisch während des Förderns an den Kettengliedern gehalten, im Gegensatz zu Förderbändern, wo Münzen durch Haftreibung gehalten werden. Durch das mechanische Halten bieten Kettengliedförderer eine zuverlässige Förderung der Münzen. Eine gattungsgemäße Fördervorrichtung ist bekannt aus WO 2018/141421 A1. Die Förderkette dieser Fördervorrichtung ist in einem modular aufgebauten, aus einer Mehrzahl von lösbar miteinander verbundenen Schienenelementen bestehenden Schienensystem geführt. Dadurch lassen sich in einfacher Weise unterschiedliche Streckenverläufe für die Förderkette, insbesondere unterschiedliche Höhen des Förderwegs, realisieren. Die Kettenglieder des bekannten Kettenförderers weisen Mitnahmeeinrichtungen in Form von Mitnahmevorsprüngen auf zur Mitnahme von Münzen im Zuge ihrer Förderung von einem niedrigeren Niveau auf ein höheres Niveau. Um ein Herunterfallen von durch die Mitnahmeeinrichtungen mitgenommenen Münzen zu verhindern, ist das durch den Kettenförderer gebildete Oval gegenüber der Vertikalen geneigt.

Mit der bekannten Fördervorrichtung wird zwar eine zuverlässige Mitnahme und damit Förderung der Münzen von einem niedrigeren Niveau auf ein höheres Niveau ermöglicht. Durch das Erfordernis der gegenüber der Vertikalen geneigten Anordnung des Förderwegs ergibt sich allerdings bei großen Höhenunterschieden zwischen dem ersten Niveau und dem zweiten Niveau eine erhebliche Baugröße.

Um auch bei einer Anordnung einer Förderkette in vertikal aufsteigender und vertikal absteigender Richtung ein Herabfallen von durch Kettenglieder gehaltenen Münzen zu verhindern, wird in WO 2018/115944 A1 ein Andruckelement zum Andrücken der von der Förderschleife transportierten Münzen auf die Förderschleife vorgeschlagen. Das Andruckelement erstreckt sich im Wesentlichen entlang des aufsteigenden Abschnitts der Förderschleife. Durch ein solches Andruckelement wird zwar auch bei vertikal aufsteigender Förderschleife ein Herabfallen von Münzen zuverlässig verhindert, so dass eine geringere Baugröße der Fördervorrichtung insbesondere bei großem Höhenunterschied zwischen dem ersten und zweiten Niveau ermöglicht wird. Allerdings ist die Konstruktion mit dem Andruckelement aufwendig und insbesondere ein gegenüber der Förderkette feststehendes Andruckelement bringt einen nicht unerheblichen Verschleiß und ein Risiko für Wartungsausfälle mit sich. Ein sich mit der Fördererschleife bzw. parallel zu der Förderschleife bewegendes Andruckelement erhöht den konstruktiven Aufwand nochmals erheblich.

US 2017/0213408 A1 beschreibt einen Münzförderer, umfassend eine Mehrzahl von Fördergliedern zum Fördern von Münzen entlang eines schleifenförmigen Förderwegs. Die Förderglieder umfassen jeweils erste und zweite Stützflächen für Münzen, durch die jeweils eine Münze gehalten wird. Die Stützflächen sind durch einen Gelenksabschnitt voneinander getrennt, sodass eine Relativbewegung der Stützflächen möglich ist.

Aus GB 2513539 A ist ein weiteres Münzfördersystem bekannt, umfassend erste und zweite Endlosförderer, wobei der zweite Endlosförderer innerhalb des ersten Endlosförderers angeordnet ist. Förderglieder des Münzförderers weisen Münzhaltestege auf, auf denen Münzen aufliegen können.

Aus US 5531331 A ist eine Sortiervorrichtung bekannt, die zum Beispiel zum Sortieren von Chips im Gamingbereich eingesetzt werden kann. Die Sortiervorrichtung umfasst eine drehende Transferscheibe, die einzelne Chips einem Förderer zuführt. Der Förderer trägt die Chips zu einem Sensor, der die Farbe der Chips detektiert und anschließend zu einer Chipausgabe, die die Chips entsprechend ihrer Farbe in verschiedene Container sortiert.

Die Erfindung löst die Aufgabe mit einer Fördervorrichtung gemäß dem unabhängigen Anspruch 1. Vorteilhafte Ausgestaltungen finden sich in den abhängigen Ansprüchen, der Beschreibung und den Figuren.

Für eine Fördervorrichtung der eingangs genannten Art löst die Erfindung die Aufgabe dadurch, dass die Kettenglieder jeweils mindestens einen Münzhaltesteg aufweisen, der zu fördernde Münzen einerseits entgegen einer Förderrichtung der Münzen von dem ersten Niveau auf das zweite Niveau und andererseits quer zur Förderrichtung an dem jeweiligen Kettenglied hält.

Mit der erfindungsgemäßen Fördervorrichtung werden Münzen von einem ersten niedrigeren Niveau auf ein zweites höheres Niveau gefördert. Bei den zu fördernden Münzen handelt es sich vorzugsweise um Bezahlmünzen einer bestimmten Währung, zum Beispiel Euro Münzen, oder dergleichen. Es kann sich aber auch um anderweitige Wertmünzen oder Token handeln. Die zu fördernden Münzen bestehen vorzugsweise aus einem Metall. Es sind jedoch auch andere Materialien denkbar, zum Beispiel Kunststoff. Über einen Münzeinlass auf dem ersten, niedrigeren Niveau werden die zu fördernden Münzen dem erfindungsgemäßen Endlos-Kettengliedförderer zugeführt. Der Endlos-Kettengliedförderer besteht aus einer Vielzahl von gelenkig miteinander verbundenen Kettengliedern und wird im Betrieb durch einen Antrieb drehend angetrieben. Dadurch werden über den Münzeinlass zugeführte Münzen von dem ersten Niveau auf das zweite Niveau gefördert. Auf dem höheren zweiten Niveau ist ein Münzauslass vorgesehen, über den die auf das zweite Niveau geförderten Münzen zur weiteren Verwendung ausgegeben werden, zum Beispiel ausgezahlt werden. Die Fördervorrichtung kann auch einen Münzhopper umfassen, der mit dem Münzeinlass verbunden ist und Münzen diesem zur Förderung auf das zweite Niveau, beispielsweise zur Auszahlung, zuführt. Im Zuge ihrer Drehbewegung nehmen die erfindungsgemäßen Kettenglieder über den Münzeinlass zugeführte Münzen mit und halten diese mechanisch während des Förderns auf das zweite Niveau. Im Zuge ihrer Drehbewegung kommt es zeitweise zu einem Verschwenken der gelenkig miteinander verbundenen Kettenglieder. Die Münzen können auf dem zweiten Niveau beispielsweise schwerkraftbedingt von den im Zuge der Drehung ihre Ausrichtung ändernden Kettengliedern in den Münzauslass herabfallen. Als Antrieb des Kettengliedförderers kann ein elektrischer Antriebsmotor vorgesehen sein. Beispielsweise kann durch den Antrieb ein Zahnrad gedreht werden, das mit entsprechenden Zähnen der Kettenglieder kämmt und den Kettengliedförderer so dreht. Der Kettengliedförderer kann ein Gehäuse aufweisen, in dem die Kettenglieder drehend angeordnet sind.

Prinzipiell existieren unterschiedliche Anforderungen an Münzförderer. Einerseits ist in bestimmten Anwendungsfällen der Transport jeweils genau einer Münze durch ein Kettenglied gewünscht. Es handelt sich dann um einen sogenannten Singulator-Kettengliedförderer. Singulator-Kettengliedförderer kommen zum Beispiel zum Einsatz, wenn Münzen einzeln gezählt oder untersucht werden sollen. Andererseits kann es erwünscht sein, mit einem Kettenglied mehrere Münzen zu fördern, um so ein möglichst schnelles Fördern der Münzen von dem ersten Niveau auf das zweite Niveau zu ermöglichen, zum Beispiel für eine möglichst schnelle Auszahlung einer Münzmenge. Solche Kettengliedförderer werden auch als Eskalator-Kettengliedförderer bezeichnet. Die erfindungsgemäße Fördervorrichtung ist grundsätzlich für beide Anforderungen geeignet. Es kann sich bei dem erfindungsgemäßen Kettengliedförderer also sowhl um einen Singulator-Kettengliedförderer als auch um einen Eskalator-Kettengliedförderer handeln.

Erfindungsgemäß weisen die Kettenglieder des Kettengliedförderers jeweils mindestens einen Münzhaltesteg auf. Natürlich können die Kettenglieder auch j eweils mehr als einen Münzhaltesteg aufweisen, zum Beispiel zwei Münzhaltestege. Der mindestens eine Münzhaltesteg hält die zu fördernden Münzen im Zuge des Förderns von dem ersten Niveau auf das zweite Niveau einerseits entgegen der Förderrichtung der Münzen. Insbesondere verhindert der mindestens eine Münzhaltesteg während des Förderns auf das zweite Niveau das Herabfallen von Münzen entgegen der Förderrichtung nach unten. Andererseits hält der mindestens eine Münzhaltesteg die zu fördernden Münzen während des Förderns von dem ersten Niveau auf das zweite Niveau auch quer zu der Förderrichtung an dem jeweiligen Kettenglied, insbesondere senkrecht zur Förderrichtung. Der mindestens eine Münzhaltesteg hält die Münzen also auch gegen ein seitliches Abfallen bzw. Abkippen der Münzen von dem Kettenglied, wie dies insbesondere bei einem steilen Anstiegswinkel bis zu einem vertikalen Anstieg des Kettengliedförderers ohne Vorsehen eines Andruckelements möglich wäre. Es erfolgt also ein Halten der Münzen in einer Richtung weg von dem jeweiligen Kettenglied bzw. einem Grundkörper des jeweiligen Kettenglieds. Der mindestens eine Münzhaltesteg bildet eine Tasche, in der die zu fördernden Münzen während des Förderns auf das zweite Niveau zumindest teilweise aufgenommen werden. Auf diese Weise werden die Münzen auch ohne Vorsehen eines zusätzlichen Andruckelements und auch bei steilen Anstiegswinkeln des Kettengliedförderers bis hin zu einem vertikalen Anstieg des Kettengliedförderers zuverlässig mechanisch allein durch die Kettenglieder gehalten und so gegen ein unerwünschtes schwerkraftbedingtes vorzeitiges Herabfallen gesichert. Erfindungsgemäß wird somit ein zuverlässiges Fördern der Münzen auch bei großem Höhenunterschied zwischen dem ersten und zweiten Niveau von mehr als 1 m, zum Beispiel bis zu 2 m, bei geringer Baugröße der Fördervorrichtung und in konstruktiv einfacher Weise ermöglicht. Die Erfindung basiert dabei auf der überraschenden Erkenntnis, dass auch mit dem mindestens einen Münzhaltsteg ein sicheres Vereinzeln und Fördern von Münzen möglich ist, insbesondere wenn die zu fördernde Münzmenge entsprechend ausgestaltet oder ausgewählt ist. Zum Beispiel Euro-Münzen unterscheiden sich in ihrer Dicke und ihrem Durchmesser ausreichend wenig voneinander, so dass ein sicheres Vereinzeln möglich ist. Bei anderen Münzmengen kann zum Beispiel eine Auswahl von für die Fördervorrichtung zugelassenen Münzen getroffen werden, wobei zum Beispiel Münzen mit stark abweichendem Durchmesser oder stark abweichender Dicke nicht zugelassen werden und bei Einwurf entsprechend abgewiesen und zurückgegeben werden können.

Je nachdem, ob der Kettengliedförderer ein Singulator-Kettengliedförderer oder ein Eskalator-Kettengliedförderer ist, können von den Taschen jeweils genau eine Münze oder jeweils mehrere Münzen aufgenommen und gehalten werden. Grundsätzlich kann der mindestens eine Münzhaltesteg also so ausgebildet sein, dass er immer genau eine Münze während des Förderns von dem ersten Niveau auf das zweite Niveau hält. Der mindestens eine Münzhaltesteg kann also so ausgebildet sein, dass gleichzeitig nicht zwei Münzen von diesem gehalten werden können, insbesondere nicht aufeinanderliegend. Wenn dies gewünscht ist, ist es aber auch möglich, den Münzhaltesteg so auszubilden, dass er gleichzeitig mehreren Münzen während des Förderns von dem ersten Niveau auf das zweite Niveau halten kann, insbesondere wenn besonders große Förderkapazitäten gewünscht sind.

Der Kettengliedförderer weist einen im angetriebenen Zustand aufsteigenden ersten Abschnitt und einen im angetriebenen Zustand absteigenden zweiten Abschnitt auf, wobei der erste Abschnitt an seinem höheren Ende über einen dritten Abschnitt in das höhere Ende des zweiten Abschnitts übergeht, und wobei der zweite Abschnitt an seinem niedrigeren Ende über einen vierten Abschnitt in das niedrigere Ende des ersten Abschnitts übergeht. Zwischen dem höheren Ende des ersten Abschnitts und des zweiten Abschnitts ist somit ein dritter Abschnitt des Kettengliedförderers vorgesehen und zwischen dem niedrigeren Ende des zweiten Abschnitts und des ersten Abschnitts ist ein vierter Abschnitt des Kettengliedförderers vorgesehen. Die Abschnitte werden durch die miteinander verbundenen Kettenglieder des Kettengliedförderers gebildet. Gemeinsam bilden die Abschnitte die Förderstrecke des Kettengliedförderers. Sie können zum Beispiel eine ovale Förderstrecke bilden. Der erste und der zweite Abschnitt können zum Beispiel parallel zueinander angeordnet sein. Ein vertikaler Anstieg und/oder ein vertikaler Abstieg des Kettengliedförderers ermöglicht eine besonders kompakte Bauweise der Fördervorrichtung auch bei großem Höhenunterschied zwischen dem ersten und dem zweiten Niveau. Gleichzeitig ist durch die erfindungsgemäße Ausgestaltung der Kettenglieder jederzeit ein sicheres Halten der geförderten Münzen insbesondere im ersten Abschnitt gewährleistet.

Der dritte Abschnitt kann nach einer weiteren Ausgestaltung gekrümmt sein, vorzugsweise halbkreisförmig gekrümmt. Alternativ oder zusätzlich kann der vierte Abschnitt gekrümmt sein, vorzugsweise halbkreisförmig gekrümmt. Insbesondere ist ein symmetrischer Verlauf des Kettengliedförderers möglich, zum Beispiel als Oval. Die zu fördernden Münzen können insbesondere im Bereich des dritten Abschnitts aufgrund der sich im Zuge der Krümmung des dritten Abschnitts ändernden Ausrichtung der Kettenglieder schwerkraftbedingt von den Kettengliedern herabfallen und in den Münzauslass gelangen. Der Zeitpunkt bzw. der Ort des Herabfallens der Münzen kann durch eine gezielte Ausgestaltung der Krümmung des dritten Abschnitts in gewünschter Weise eingestellt werden. Zu diesem Zweck kann der dritte Abschnitt auch einen von einer Halbkreisform abweichenden Verlauf besitzen, insbesondere wenn ein früheres Herabfallen der Münzen gewünscht ist. Beispielsweise ist es möglich, dass der dritte Abschnitt einen sich an den ersten Abschnitt anschließenden ersten gekrümmten Unterabschnitt mit einem ersten, relativ kleinen Krümmungsradius und einen sich an den ersten gekrümmten Unterabschnitt anschließenden zweiten Unterabschnitt aufweist, der in den zweiten Abschnitt des Kettengliedförderers mündet. Der zweite Unterabschnitt dient zum Überbrücken zwischen dem stärker gekrümmten ersten Unterabschnitt und dem zweiten Abschnitt des Kettegliedförderers. Der zweite Unterabschnitt kann gerade ausgebildet sein oder ebenfalls eine Krümmung besitzen, insbesondere mit einem zweiten Krümmungsradius, der größer ist als der erste Krümmungsradius des ersten Krümmungsabschnitts.

Nach einer weiteren Ausgestaltung kann der Antrieb innerhalb des Kettengliedförderers angeordnet sein, wobei ein durch den Antrieb angetriebenes Zahnrad im Bereich des zweiten Abschnitts mit den Kettengliedern kämmt. Wie erläutert, kann der Antrieb zum Beispiel einen Elektromotor umfassen. Eine Anordnung des Antriebs innerhalb des Kettengliedförderers und im Bereich des zweiten Abschnitts, bevorzugt an einem unteren Ende des Kettengliedförderers, erlaubt eine besonders kompakte Bauart der erfindungsgemäßen Fördervorrichtung.

Erfindungsgemäß bildet der mindestens eine Münzhaltesteg einen Hinterschnitt aus, durch den die zu fördernden Münzen gehalten werden. Beispielsweise kann der mindestens eine Münzhaltesteg im Querschnitt L-förmig ausgebildet sein. Zusammen mit einem beispielsweise quaderförmigen Grundkörper des Kettenglieds kann der Münzhaltesteg im Querschnitt zum Beispiel eine C-Form ausbilden. Dadurch wird eine Tasche gebildet, in der die zu fördernden Münzen besonders sicher auch quer zur Förderrichtung vom ersten Niveau auf das zweite Niveau gehalten werden. Je nach Größe des Hinterschnitts, ist es möglich, dass mehrere Münzen aufeinanderliegend in der durch den Hinterschnitt gebildeten Tasche aufgenommen werden können, oder dass jeweils nur genau eine Münze in der durch den Hinterschnitt gebildeten Tasche aufgenommen werden kann.

Nach einer weiteren Ausgestaltung können die Kettenglieder jeweils zwei Münzhaltestege aufweisen, die unter einem Winkel zueinander verlaufen. Durch das Vorsehen von zwei Münzhaltestegen wird ein weiter verbesserter Halt der Münzen erreicht. Jeder der Münzhaltestege kann ausgebildet sein wie in dieser Anmeldung für den mindestens einen Münzhaltesteg erläutert. Natürlich wären auch zum Beispiel zwei Münzhaltestege denkbar, die jeweils einen nicht geraden Verlauf besitzen, zum Beispiel einen gekrümmten Verlauf.

Die zwei Münzhaltestege können weiterhin entlang einer V-Form angeordnet und dazu ausgebildet sein, Münzen bei der Förderung von dem ersten Niveau auf das zweite Niveau in einer durch die V-Form gebildeten Aufnahme zu halten. Die Öffnung der V-Form ist im ersten Abschnitt des Kettengliedförderers in Förderrichtung gerichtet. Die Münzen werden also während der Förderung von dem ersten Niveau auf das zweite Niveau in der V-förmigen Aufnahme sicher gehalten.

Nach einer weiteren Ausgestaltung ist es möglich, dass sich die zwei Münzhaltestege eines Kettenglieds nicht berühren. Insbesondere ist es möglich, dass keine Berührung der V-förmig aufeinander zulaufenden Enden der beiden Münzhaltestege vorliegt. Es muss durch die zwei Münzhaltestege also kein geschlossenes V gebildet werden. Die vorgenannte Ausgestaltung kann in vorteilhafter Weise zum Beispiel das Herausfallen kleinerer Störelemente oder Verschmutzungen nach unten ermöglichen, so dass diese nicht bis zu dem Münzauslass mitgefördert werden. Auch kann zwischen den Enden der Münzhaltestege ein Abschnitt ausgebildet sein, mit dem ein Zahnrad des Antriebs zum Antreiben des Kettengliedförderers kämmt.

Nach einer weiteren besonders praxisgemäßen Ausgestaltung können die Kettenglieder jeweils einstückig mit dem mindestens einen Münzhaltesteg ausgebildet sein. Die Kettenglieder können aus einem Kunststoff bestehen. Zum Beispiel können die Kettenglieder jeweils in einem Kunststoffspritzgussverfahren hergestellt sein. Hierdurch werden eine besonders einfache Herstellung und spätere Montage und Demontage ermöglicht.

Die Kettenglieder können nach einer weiteren Ausgestaltung über eine Rastverbindung gelenkig miteinander verbunden sein, insbesondere lösbar. Dies ermöglicht eine besonders einfache Montage und Demontage und damit eine besonders einfache Anpassbarkeit des Kettengliedförderers an unterschiedliche Förderhöhen. Zum Beispiel können an einem Ende jedes Kettenglieds eine oder mehrere Rastaufnahmen und an einem gegenüberliegenden Ende des Kettenglieds ein oder mehrere Rastvorsprünge vorgesehen sein. Die Rastvorsprünge können zum Beispiel im Querschnitt zylindrisch ausgebildet sein. Die Rastaufnahmen können entsprechend im Querschnitt C-förmig ausgebildet sein. Auch die Rastvorsprünge und Rastaufnahmen können einstückig mit dem jeweiligen Kettenglied ausgebildet sein.

Der Münzeinlass kann nach einer weiteren Ausgestaltung eine Bodenrutsche für über den Münzeinlass zugeführte Münzen aufweisen. Wie erläutert, können Münzen zum Beispiel aus einem Hopper dem Münzeinlass zugeführt werden. Durch den Münzeinlass fallen die Münzen auf den Kettengliedförderer, insbesondere im Bereich des vierten Abschnitts. Ohne Vorsehen einer Bodenrutsche fallen die Münzen direkt auf Kettenglieder des Kettengliedförderers und es kann unter Umständen zu einem Rollen von auf ihren seitlichen Kanten aufstehenden Münzen oder einer unerwünschten Ansammlung von Münzen kommen, die eine Förderung der Münzen, insbesondere eine Vereinzelung, erschweren können. Durch die Bodenrutsche werden diese Probleme vermieden. Die Bodenrutsche verhindert ein direktes Fallen der Münzen auf die Kettenglieder. Dazu ist die Bodenrutsche so angeordnet, dass über den Münzeinlass zugeführte Münzen zunächst auf die Bodenrutsche fallen. Die Bodenrutsche kann durch die vorzugsweise unter der Bodenrutsche hindurch bewegten Kettenglieder des Kettengliedförderers vibriert werden. Durch die Bodenrutsche wird ein Rollen von Münzen bzw. eine Ansammlung mehrerer Münzen besonders sicher verhindert. Gleichzeitig werden Münzen, die flach auf den Kettengliedern aufliegen würden, für das Mitnehmen durch ein Kettenglied orientiert. Die Bodenrutsche ist insbesondere feststehend ausgebildet, so dass sich die Kettenglieder insbesondere im vierten Abschnitt des Kettengliedförderers unter der Bodenrutsche hindurchbewegen. Die Bodenrutsche kann einen gekrümmten Abschnitt aufweisen, der an eine Krümmung des vierten Abschnitts des Kettengliedförderers angepasst ist. Die Bodenrutsche kann zum Beispiel als Blech ausgebildet sein, insbesondere als gekrümmtes Blech, angepasst an die Krümmung des vierten Abschnitts des Kettengliedförderers. Aber auch eine Bodenrutsche aus Kunststoff oder dergleichen wäre denkbar.

Nach einer weiteren besonders vorteilhaften Ausgestaltung kann ein auf den Kettengliedförderer mündendes Ende der Bodenrutsche nicht-senkrecht zur Förderrichtung des Kettengliedförderers ausgebildet sein, vorzugweise schräg zur Förderrichtung oder entlang einer nicht geraden Linie. Zum Beispiel kann das auf dem Kettengliedförderer mündende Ende der Bodenrutsche einen V-förmigen Ausschnitt oder eine andere von einer zur Förderrichtung Senkrechten abweichende Form besitzen. Durch ein unregelmäßiges Mündungsende der Bodenrutsche werden zum Beispiel auf ihren Seitenkanten rollende Münzen gekippt, so dass sie nachfolgend ordnungsgemäß von der Fördervorrichtung gefördert werden können. Auch unerwünschte Münzansammlungen werden dadurch noch sicherer vermieden.

Der Münzauslass kann nach einer weiteren Ausgestaltung eine Leitrutsche aufweisen zum Abfördern von Münzen von dem Kettengliedförderer, insbesondere zum Leiten von von den Kettengliedern herabfallenden Münzen in den Münzauslass. Dadurch kann das Zuführen der Münzen von dem Kettengliedförderer in den Münzauslass verbessert werden.

Die Kettenglieder können weiterhin j eweils mindestens einen seitlichen Begrenzungssteg, vorzugsweise zwei an einander gegenüberliegenden Seiten eines Grundkörpers der Kettenglieder angeordnete seitliche Begrenzungsstege, zum seitlichen Halten einer zu fördernden Münze aufweisen. Damit wird auch ein seitliches Halten der Münzen auf den Kettengliedern jederzeit sichergestellt. Der mindestens eine seitliche Begrenzungssteg kann ebenfalls einstückig mit dem Kettenglied ausgebildet sein.

Nach einer weiteren Ausgestaltung kann vorgesehen sein, dass die Kettenglieder jeweils zwei einander gegenüberliegend angeordnete seitliche Begrenzungsstege aufweisen, die derart beabstandet sind, dass die zwei kleinsten Münzen der zu fördernden Münzen nicht nebeneinander zwischen den Begrenzungsstegen gehalten werden können. Nach einer weiteren Ausgestaltung kann der mindestens eine Münzhaltesteg derart dimensioniert sein, dass die zwei dünnsten Münzen der zu fördernden Münzen nicht aufeinander durch den mindestens einen Münzhaltesteg gehalten werden können.

Durch die vorgenannten Ausgestaltungen wird eine sichere Vereinzelung der Münzen zum Beispiel für eine gezielte Auszahlung realisiert. Dennoch ist eine hohe Fördergeschwindigkeit mit der erfindungsgemäßen Fördervorrichtung möglich von beispielsweise bis zu fünf Münzen pro Sekunde.

Anstelle seitlicher Begrenzungsstege wäre es grundsätzlich auch denkbar, zum Beispiel einander gegenüberliegende seitliche Gehäusewände deart zu beabstanden, dass die zwei kleinsten Münzen der zu fördernden Münzen nicht nebeneinander zwischen den Gehäusewänden gehalten werden können.

Wenn sehr hohe Förderkapazitäten gewünscht sind, von zum Beispiel 20 Münzen pro Sekunde, wie dies zum Beispiel in Geldwechselvorrichtungen gewünscht sein kann, ist auch eine größere Dimensionierung des mindestens einen Münzhaltestegs und/oder ein Verzicht auf die seitlichen Begrenzungsstege möglich, so dass mehrere Münzen aufeinander gestapelt und/oder nebeneinander durch ein Kettenglied gehalten werden können.

Der erfindungsgemäße Kettengliedförderer kann modular aufgebaut sein. Damit wird eine einfache Anpassung an unterschiedliche Höhen realisiert. Beispielsweise sind Anpassungen der erfindungsgemäßen Fördervorrichtung im Bereich von 300 mm bis 2.000 mm möglich.

Der Münzauslass kann nach einer weiteren Ausgestaltung mindestens einen Sensor umfassen, ausgebildet zum Zählen und/oder Erkennen von durch den Münzauslass ausgegebenen Münzen. Grundsätzlich kann die erfindungsgemäße Fördervorrichtung zum Beispiel in Automatensystemen sowohl als Eingabe- als auch als Ausgabevorrichtung von Münzen eingesetzt werden. Am Münzauslass der Fördervorrichtung kann eine Leiterplatte mit einer Elektronik angebracht sein, die zum Beispiel mit einer Sensorik und gegebenenfalls einer Auswerteelektronik ausgestattet ist. Insbesondere bei einer Ausgestaltung des Kettengliedförderers derart, dass dieser Münzen dem Münzauslass vereinzelt zuführt, können die Münzen durch Vorsehen eines geeigneten Sensors gezählt werden. Der Sensor kann zum Beispiel eine optische Messvorrichtung, zum Beispiel eine Lichtschranke umfassen. Es kann sich aber auch um einen kapazitiven oder induktiven Sensor handeln. Durch eine Auswerteelektronik, gegebenenfalls mit einer entsprechenden Software, lassen sich die Ergebnisse der Münzzählung vorzugsweise über eine digitale Schnittstelle zur Steuerung des Automatensystems übertragen. Damit wäre auch ein Start-Stopp-Betrieb der Fördervorrichtung möglich, um beispielsweise der Fördervorrichtung nachgeschaltete Komponenten in geeigneter Weise einzubinden. Als Sensor kommt auch zum Beispiel ein induktiver Sensor in Frage, der die durch den Münzauslass abgeführten Münzen zum Beispiel anhand ihres Durchmessers unterscheiden kann. Auf diese Weise ist in einfacher Weise ein Erkennen des jeweiligen Münztyps bzw. des Münzwerts möglich. Auf dieser Grundlage können zum Beispiel gezielt bestimmte Geldbeträge ausgezahlt oder gezählt werden oder es kann eine bestimmte Anzahl von Münzen auf ihre vollständige Auszahlung überprüft werden. Ebenso ließe sich auf Grundlage solcher Sensoren und gegebenenfalls einer entsprechenden Auswerteelektronik auch eine Auszahlgeschwindigkeit über eine Drehzahlregelung des Kettengliedförderers, insbesondere seines Antriebs, realisieren.

Ausführungsbeispiele der Erfindung werden nachfolgend anhand von Figuren näher erläutert. Es zeigen schematisch:
- Figur 1: eine erfindungsgemäße Fördervorrichtung in einer Seitenansicht,
- Figur 2: den Ausschnitt A aus Figur 1,
- Figur 3: den Ausschnitt B aus Figur 1,
- Figur 4: eine Ansicht entsprechend Ausschnitt B in Figur 1 für ein weiteres Ausführungsbeispiel,
- Figur 5: ein Kettenglied der in Figur 1 gezeigten Fördervorrichtung in einer ersten perspektivischen Ansicht,
- Figur 6: das Kettenglied aus Figur 5 in einer zweiten perspektivischen Ansicht,
- Figur 7: ein Kettenglied der in Figur 1 gezeigten Fördervorrichtung nach einem weiteren Ausführungsbeispiel in einer ersten perspektivischen Ansicht,
- Figur 8: das Kettenglied aus Figur 7 in einer zweiten perspektivischen Ansicht, und
- Figur 9: eine Bodenrutsche der in Figur 1 gezeigten Fördervorrichtung in einer perspektivischen Ansicht.

Soweit nichts anderes angegeben ist, bezeichnen in den Figuren gleiche Bezugszeichen gleiche Gegenstände.

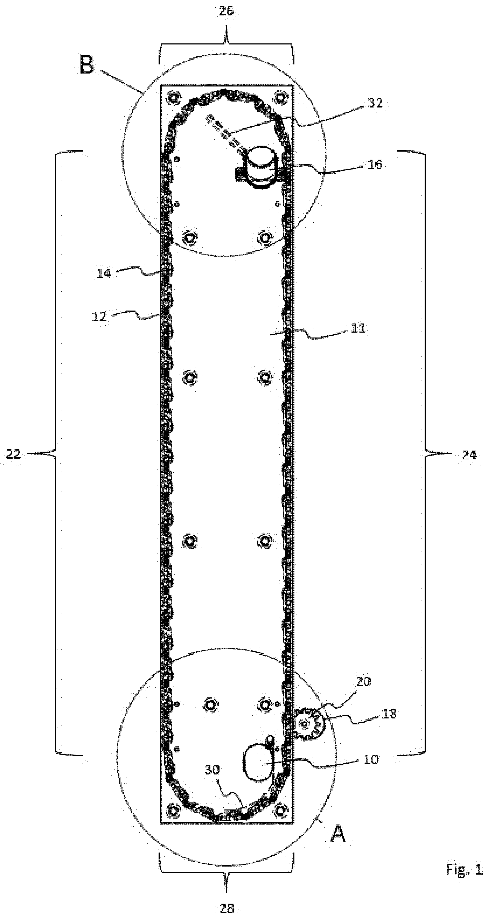

Die in Figur 1 dargestellte erfindungsgemäße Fördervorrichtung die zum Fördern von Münzen von einem ersten Niveau auf ein zweites höheres Niveau. Die Fördervorrichtung umfasst einen Münzeinlass 10, über den zu fördernde Münzen einem in einem teilweise geöffnet dargestellten Gehäuse 11 angeordneten Endlos-Kettengliedförderer 12 zugeführt werden. Der Kettengliedförderer 12 weist eine Vielzahl von gelenkig miteinander verbundenen Kettengliedern 14 auf, die im gezeigten Beispiel über eine Rastverbindung gelenkig miteinander verbunden sind, wie nachfolgend noch näher erläutert wird. Der Münzeinlass 10 ist auf dem ersten niedrigeren Niveau angeordnet. Auf dem zweiten höheren Niveau ist ein Münzauslass 16 vorgesehen, dem durch den Kettengliedförderer 12 von dem ersten Niveau auf das zweite Niveau geförderte Münzen zugeführt werden. Die Münzen können dem Münzeinlass 10 zum Beispiel über einen Münzhopper zugeführt werden. Von dem Münzauslass 16 können die Münzen einer weiteren Verwendung zugeführt werden, zum Beispiel ausgezahlt werden.

Ein Antrieb 18, zum Beispiel ein Elektromotor 18, treibt in dem gezeigten Beispiel ein Zahnrad 20 drehend an, das mit einer entsprechenden Verzahnungsstruktur der Kettenglieder 14 des Kettengliedförderers 12 kämmt, so dass durch den Antrieb 18 die Kettenglieder 14 des Kettengliedförderers 12 drehend angetrieben werden, in Figur 1 im Uhrzeigersinn. Dabei werden über den Münzeinlass 10 zugeführte Münzen von den Kettengliedern 14 in unten noch näher zu erläuternder Weise mitgenommen und von dem ersten Niveau auf das zweite Niveau gefördert, wo sie dem Münzauslass 16 zugeführt werden. Hierzu weist der Kettengliedförderer 12 einen im angetriebenen Zustand vertikal aufsteigenden ersten Abschnitt 22 und einen im angetriebenen Zustand vertikal absteigenden zweiten Abschnitt 24 auf. Das obere Ende des ersten Abschnitts 22 geht über einen halbkreisförmig gekrümmten dritten Abschnitt 26 in das obere Ende des zweiten Abschnitts 24 über. Das untere Ende des zweiten Abschnitts 24 geht über einen ebenfalls halbkreisförmig gekrümmten vierten Abschnitt 28 in das untere Ende des ersten Abschnitts 22 über. Auf diese Weise bildet der Kettengliedförderer 12 ein Oval mit parallelen ersten und zweiten Abschnitten 22, 24 und komplementär ausgebildeten dritten und vierten Abschnitten 26, 28.

Wie in Figur 1 weiterhin zu erkennen, ist der Antrieb 18 samt Zahnrad 20 außerhalb des Kettengliedförderers 12, insbesondere außerhalb des Gehäuses 11, angeordnet, nämlich an einer Seite des Kettengliedförderers 12 im unteren Bereich des Kettengliedförderers 12. Dies kann die Demontage und Montage des Kettengliedförderers 12 vereinfachen. Der Antrieb 18 und das Zahnrad 20 könnten aber zwecks besonders kompakter Bauweise auch innerhalb des Kettengliedförderers 12 angeordnet sein, beispielsweise gespiegelt zu der in Figur 1 gezeigten Anordnung, so dass das Zahnrad im zweiten Abschnitt 24 mit Zahnabschnitten der Kettenglieder 14 kämmt. Durch die gelenkige Rastverbindung der Kettenglieder 14 miteinander kann der Kettengliedförderer 12 durch einfache Montage oder Demontage von den Kettengliedern 14 an unterschiedliche Förderhöhen zwischen dem ersten und zweiten Niveau angepasst werden.

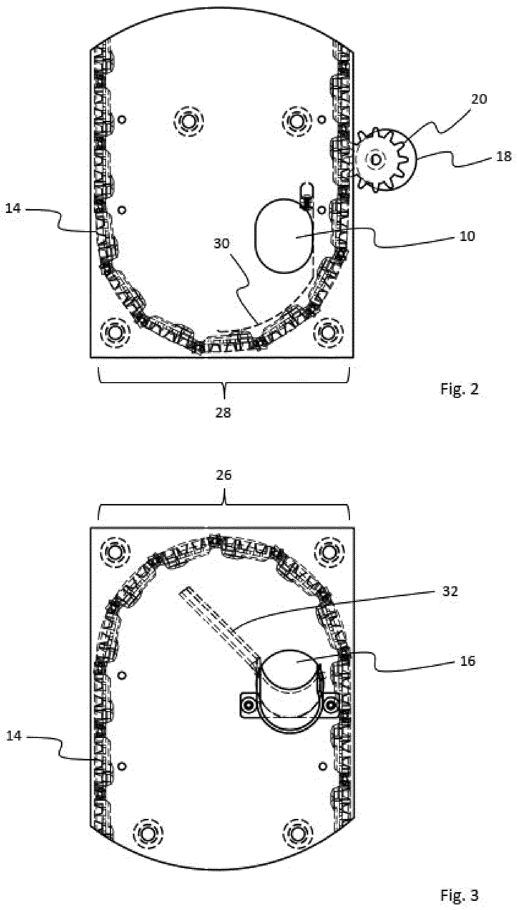

Wie außerdem in Figur 1 zu erkennen, ist unterhalb des Münzeinlasses 10 eine sich oberhalb der unter dieser hindurch drehenden Kettenglieder 14 angeordnete Bodenrutsche 30 vorgesehen, in Figur 1 gestrichelt dargestellt. Die Bodenrutsche ist in der vergrößerten Darstellung der Figur 2 besser zu erkennen. Wie in Figur 1 und der vergrößerten Darstellung der Figur 3 durch gestrichelte Linien 32 veranschaulicht, fallen die von den Kettengliedern 14 mitgenommenen Münzen im Bereich des zweiten Abschnitts 26 aufgrund der sich verändernden Ausrichtung der Kettenglieder 14 schwerkraftbedingt von diesen herab in den Münzauslass 16. Die Münzen können dabei durch eine entlang der Linie 32 angeordnete Leitrutsche zu dem Münzauslass 16 geleitet werden.

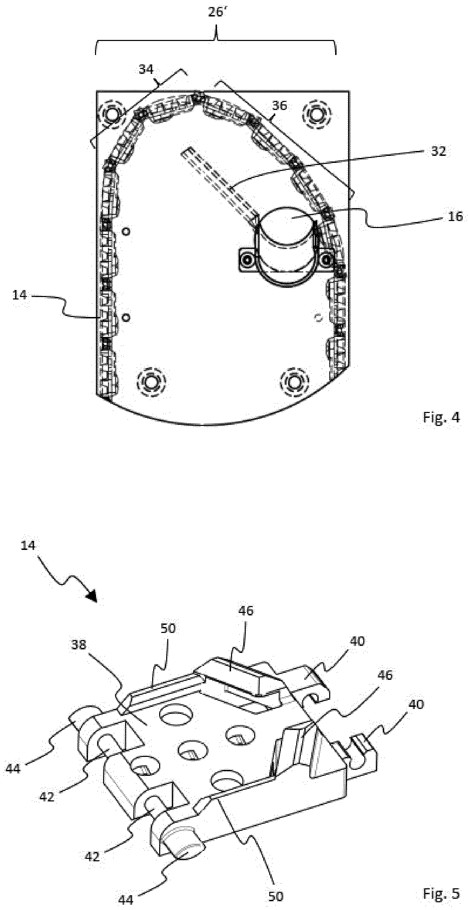

Figur 4 zeigt eine alternative Ausgestaltung des dritten Abschnitts 26' des Kettengliedförderers 12. Dabei weist der dritte Abschnitt 26' einen ersten Unterabschnitt 34 auf mit einem kleineren Krümmungsradius als der zweite Abschnitt 26 nach dem vorstehend beschriebenen Ausführungsbeispiel. Weiterhin weist der zweite Abschnitt 26' bei dem in Figur 4 gezeigten Ausführungsbeispiel einen zweiten Unterabschnitt 36 auf, der mit einem erheblich größeren Krümmungsradius als der erste Unterabschnitt 34 in den zweiten Abschnitt 24 mündet. Bei der Ausgestaltung nach Figur 4 fallen die von den Kettengliedern 14 mitgenommenen Münzen schwerkraftbedingt früher aus diesen heraus in den Münzauslass 16.

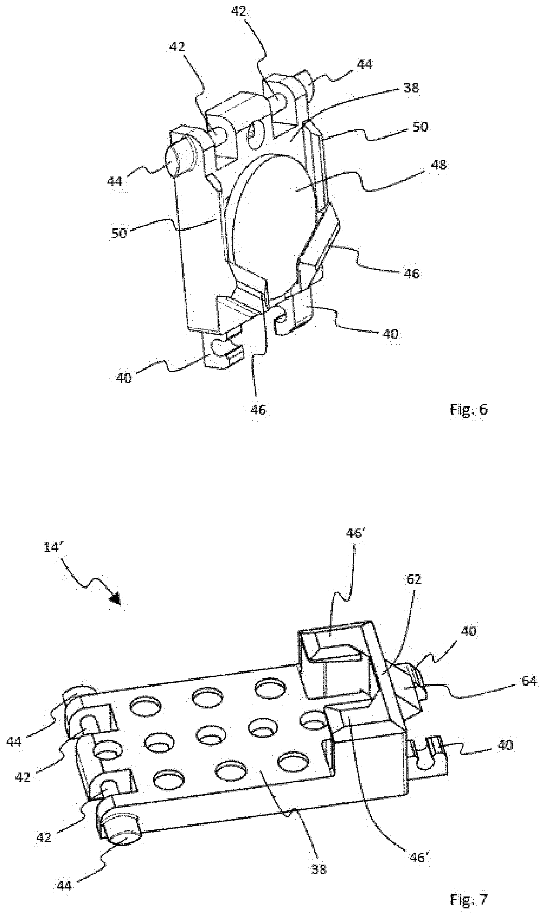

In den Figuren 5 und 6 ist ein Kettenglied 14 des Kettengliedförderers 12 aus Figur 1 nach einem ersten Ausführungsbeispiel dargestellt. Der Kettengliedförderer 14 umfasst einen quaderförmigen Grundkörper 38 an dessen einem Ende im Querschnitt C-förmige Rastaufnahmen 40 und an dessen gegenüberliegendem Ende zylindrische Rastvorsprünge 42 ausgebildet sind. Über die Rastaufnahmen 40 bzw. Rastvorsprünge 42 können grundsätzlich beliebig viele der Kettenglieder 14 in einfacher Weise rastend lösbar gelenkig miteinander verbunden werden. Im Bereich des Endes mit den Rastvorsprüngen 42 sind in dem gezeigten Beispiel außerdem außenseitige Führungszapfen 44 ausgebildet, mit denen die Kettenglieder 14 im Zuge ihrer Drehbewegung geführt sind. Selbstverständlich wäre auch eine entgegengesetzte Ausgestaltung der Rastaufnahmen 40 und Rastvorsprünge 42 denkbar, so dass die Rastaufnahmen 40 an dem Ende mit dem Führungszapfen 44 ausgebildet sind und die Rastvorsprünge 42 am gegenüberliegenden Ende. Und natürlich wäre auch eine gemischte Ausgestaltung denkbar, bei der an jedem Ende eine Rastaufnahme 40 und ein Rastvorsprung 42 ausgebildet sind.

Auf der Oberseite des Grundkörpers 38 erstrecken sich zwei entlang einer V-Form angeordnete Münzhaltestege 46. Die Münzhaltestege 46 sind im Querschnitt jeweils L-förmig ausgebildet und bilden einen Hinterschnitt bzw. eine Tasche zur Aufnahme einer Münze 48 aus, wie dies in Figur 6 gezeigt ist. Wie in den Figuren 5 und 6 zu erkennen, berühren sich die Münzhaltestege 46 nicht. Sie erstrecken sich entsprechend nur entlang eines Teils einer V-Form, wobei die Aufnahme der V-Form im ersten Abschnitt 22 des Kettengliedförderers 12 in Förderrichtung, also nach oben gerichtet ist. Die Höhe der Münzhaltestege 46 bzw. ihres Hinterschnitts ist bei dem in den Figuren 5 und 6 dargestellten Ausführungsbeispiel derart, dass genau eine Münze der zu fördernden Münzen in der durch die Münzhaltestege 46 gebildeten Tasche aufgenommen werden kann, also nicht zwei Münzen aufeinander. Durch die Ausgestaltung der Münzhaltestege 46 mit Hinterschnitt wird die darin aufgenommene Münze 48 einerseits entgegen der Förderrichtung der Münze 48 von dem ersten Niveau auf das zweite Niveau, also entgegen einem Herabfallen nach unten, im ersten Abschnitt 22 gehalten. Andererseits wird die Münze 48 auch quer zur Förderrichtung an dem Kettenglied 14 gehalten, insbesondere derart, dass die Münze 48 auch während des vertikalen Förderns nach oben im ersten Abschnitt 22 nicht von dem Grundkörper 38 des Kettenglieds 14 weg von diesem herabfallen kann. Das Kettenglied 14 umfasst außerdem zwei an gegenüberliegenden seitlichen Enden des Grundkörpers 38 angeordnete seitliche Begrenzungsstege 50, durch die die Münzen 48 auch gegen ein seitliches Herabfallen von dem Kettenglied 14 gesichert sind. Außerdem ist der Abstand der Begrenzungsstege 50 derart, dass keine zwei Münzen nebeneinander von einem Kettenglied 14 gehalten werden können. Bei dem Kettenglied 14 nach den Figuren 5 und 6 handelt es sich folglich um ein Kettenglied eines Singulator-Kettengliedförderers.

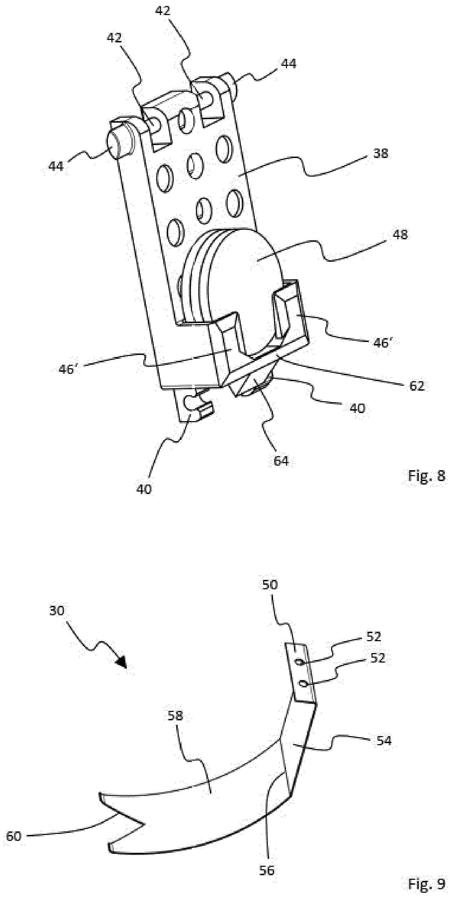

In den Figuren 7 und 8 ist ein weiteres Ausführungsbeispiel eines Kettenglieds 14' dargestellt, das ebenfalls bei der in Figur 1 gezeigten Fördervorrichtung zum Einsatz kommen kann. In diesem Fall handelt es sich um ein Kettenglied 14' zum Bilden eines Eskalator-Kettengliedförderers. Dieses Kettenglied 14' entspricht weitgehend dem Kettenglied 14 aus den Figuren 5 und 6 und gleiche Teile sind mit den gleichen Bezugszeichen versehen. Im Unterschied zu dem Kettenglied 14 aus den Figuren 5 und 6 sind die Münzhaltestege 46' des Kettenglieds 14' aus den Figuren 7 und 8 parallel zueinander angeordnet und durch einen Verbindungssteg 62 miteinander verbunden. Die Münzhaltestege 46' sind ebenfalls im Querschnitt L-förmig ausgebildet und bilden einen Hinterschnitt aus, allerdings mit einer größeren Höhe als bei dem Ausführungsbeispiel nach den Figuren 5 und 6, so dass in den durch die Münzhaltestege 46' gebildeten Taschen gleichzeitig mehrere aufeinander gestapelte Münzen 48 aufgenommen werden können, wie in Figur 8 dargestellt. Durch die Geometrie der Münzhaltestege 46' mit dem Verbindungssteg 62, insbesondere die parallele Anordnung der Münzhaltestege 46' mit quer zu den Münzhaltestegen 46' verlaufendem Verbindungssteg 62, wird ein zu starkes Kippen von durch die Münzhaltestegen 46' gehaltenen Münzen verhindert. Zu diesem Zweck kann auch die Tiefe der durch die Münzhaltestegen 46' gebildeten Taschen begrenzt werden. Die Förderkapazität der Fördervorrichtung kann durch die Münzhaltestegen 46' erheblich erhöht werden, wobei auf eine Vereinzelung der Münzen 48 naturgemäß verzichtet wird. Daher sind auch keine seitlichen Begrenzungsstege erforderlich. Es wird aber darauf hingewiesen, dass selbstverständlich auch bei dem Ausführungsbeispiel nach den Figuren 7 und 8 entsprechende Begrenzungsstege vorgesehen sein können, ebenso wie gegebenenfalls auf die Begrenzungsstege 50 bei dem Ausführungsbeispiel nach den Figuren 5 und 6 verzichtet werden kann. An der Unterseite des Verbindungsstegs 62 ist weiterhin ein im Querschnitt beispielsweise dreieckiger Vorsprung 64 angeordnet. Dieser verhindert ein Ansammeln und gegebenenfalls Einklemmen von Münzen 48 zwischen benachbarten Kettengliedern 14'. Ein solcher Vorsprung 64 kann auch eine andere Querschnittsform besitzen und kann auch bei dem Kettenglied 14 nach den Figuren 5 und 6 vorgesehen sein.

Die Kettenglieder 14 und 14' sind insbesondere einstückig ausgebildet und bestehen zum Beispiel aus einem Kunststoff. Sie können zum Beispiel in einem Kunststoffspritzgussverfahren hergestellt sein.

In Figur 9 ist in einer vergrößerten perspektivischen Darstellung die Bodenrutsche 30 der erfindungsgemäßen Fördervorrichtung gezeigt. Im gezeigten Beispiel ist die Bodenrutsche 30 als Blech ausgebildet. An einem abgekanteten Halteabschnitt 50 sind Bohrungen 52 vorgesehen, über die die Bodenrutsche 30 zum Beispiel an einem Teil des Gehäuses 11 der Fördervorrichtung befestigt werden kann, zum Beispiel durch Verschrauben. Der Halteabschnitt 50 geht in einen ebenen Grundabschnitt 54 über, der wiederum über eine Knickkante 56 in einen gekrümmten Rutschenabschnitt 58 übergeht. Wie insbesondere in den Figuren 1 und 2 zu erkennen, ist der gekrümmte Rutschenabschnitt 58 an den gekrümmten Verlauf des vierten Abschnitts 28 derart angepasst, dass der Rutschenabschnitt 58 sich unmittelbar oberhalb der im Betrieb unter diesem hindurchdrehenden Kettenglieder 14 befindet oder auf den Kettengliedern 14 aufliegt. Im letzteren Fall kann durch die hindurchdrehenden Kettenglieder 14 vorteilhaft eine Vibration der Bodenrutsche 30 erfolgen.

In Figur 9 ist außerdem zu erkennen, dass das freie Ende 60 des Rutschenabschnitts 58 eine V-Form besitzt. Diese Ausgestaltung hat sich als besonders vorteilhaft erwiesen, um unerwünschte Münzansammlungen im vierten Abschnitt 28 des Kettengliedförderers 12 oder ein dauerhaftes Rollen von Münzen auf ihren Seitenkanten zu vermeiden. Im Betrieb fallen über den Münzeinlass 10 zugeführte Münzen 48 somit auf den Rutschenabschnitt 58 bevor sie von diesem auf die Kettenglieder 14 im vierten Abschnitt 28 des Kettengliedförderers 12 herabrutschen. Es sei noch erwähnt, dass dem Münzauslass 16 mindestens ein Sensor zugeordnet sein kann, ausgebildet zum Zählen und/oder Erkennen von durch den Münzauslass 16 abgegebenen Münzen. Auch eine zugeordnete Auswerteelektronik kann entsprechend vorgesehen sein.

### Bezugszeichenliste

- 10: Münzeinlass
- 11: Gehäuse
- 12: Kettengliedförderer
- 14: Kettenglied
- 14': Kettenglied
- 16: Münzauslass
- 18: Antrieb
- 20: Zahnrad
- 22: Erster Abschnitt
- 24: Zweiter Abschnitt
- 26: Dritter Abschnitt
- 26': Dritter Abschnitt
- 28: Vierter Abschnitt
- 30: Bodenrutsche
- 32: Gestrichelte Linien / Leitrutsche
- 34: Erster Unterabschnitt
- 36: Zweiter Unterabschnitt
- 38: Grundkörper
- 40: Rastaufnahmen
- 42: Rastvorsprünge
- 44: Führungszapfen
- 46: Münzhaltesteg
- 46': Münzhaltesteg
- 48: Münze
- 50: Begrenzungssteg
- 52: Bohrung
- 54: Grundabschnitt
- 56: Knickkante
- 58: Rutschenabschnitt
- 60: Freies Ende
- 62: Verbindungssteg
- 64: Vorsprung

## Patentansprüche

1. Fördervorrichtung zum Fördern von Münzen (48) von einem ersten Niveau auf ein zweites höheres Niveau, umfassend einen Münzeinlass (10) auf dem ersten Niveau und einen Münzauslass (16) auf dem zweiten Niveau, und umfassend einen durch einen Antrieb (18) angetriebenen Endlosförderer zum Fördern von Münzen (48) von dem Münzeinlass (10) zu dem Münzauslass (16), wobei der Endlosförderer ein Kettengliedförderer (12) mit einer Vielzahl von gelenkig miteinander verbundenen Kettengliedern (14, 14') ist, wobei die Kettenglieder (14, 14') jeweils mindestens einen Münzhaltesteg (46, 46') aufweisen, der zu fördernde Münzen (48) einerseits entgegen einer Förderrichtung der Münzen (48) von dem ersten Niveau auf das zweite Niveau und andererseits quer zur Förderrichtung an dem jeweiligen Kettenglied (14, 14') hält, **dadurch gekennzeichnet dass** der mindestens eine Münzhaltesteg (46, 46') einen Hinterschnitt ausbildet, durch den die zu fördernden Münzen (48) gehalten werden.

2. Fördervorrichtung nach Anspruch 1, **dadurch gekennzeichnet, dass** der mindestens eine Münzhaltesteg (46, 46') im Querschnitt L-förmig ausgebildet ist.

3. Fördervorrichtung nach einem der vorhergehenden Ansprüche, **dadurch gekennzeichnet, dass** die Kettenglieder (14, 14') jeweils zwei Münzhaltestege (46, 46') aufweisen, die unter einem Winkel zueinander verlaufen.

4. Fördervorrichtung nach Anspruch 3, **dadurch gekennzeichnet, dass** die zwei Münzhaltestege (46, 46') entlang einer V-Form angeordnet und dazu ausgebildet sind, Münzen (48) bei der Förderung von dem ersten Niveau auf das zweite Niveau in der durch die V-Form gebildeten Aufnahme zu halten.

5. Fördervorrichtung nach einem der vorhergehenden Ansprüche, **dadurch gekennzeichnet, dass** die Kettenglieder (14, 14') jeweils einstückig mit dem mindestens einen Münzhaltesteg (46, 46') ausgebildet sind und/oder dass die Kettenglieder (14, 14') über eine Rastverbindung gelenkig miteinander verbunden sind.

6. Fördervorrichtung nach einem der vorhergehenden Ansprüche, **dadurch gekennzeichnet, dass** der Münzeinlass (10) eine Bodenrutsche (30) für über den Münzeinlass (10) zugeführte Münzen (48) aufweist.

7. Fördervorrichtung nach Anspruch 6, **dadurch gekennzeichnet, dass** ein auf den Kettengliedförderer (12) mündendes Ende der Bodenrutsche (30) nicht-senkrecht zur Förderrichtung des Kettengliedförderers (12) ausgebildet ist, vorzugsweise schräg zur Förderrichtung oder entlang einer nicht-geraden Linie.

8. Fördervorrichtung nach einem der vorhergehenden Ansprüche, **dadurch gekennzeichnet, dass** der Münzauslass (16) eine Leitrutsche (32) aufweist zum Abfördern von Münzen (48) von dem Kettengliedförderer (12).

9. Fördervorrichtung nach einem der vorhergehenden Ansprüche, **dadurch gekennzeichnet, dass** die Kettenglieder (14, 14') jeweils mindestens einen seitlichen Begrenzungssteg (50) zum seitlichen Halten einer zu fördernden Münze (48) aufweisen.

10. Fördervorrichtung nach Anspruch 9, **dadurch gekennzeichnet, dass** die Kettenglieder (14, 14') jeweils zwei einander gegenüberliegend angeordnete seitliche Begrenzungsstege (50) aufweisen, die derart beabstandet sind, dass die zwei kleinsten Münzen (48) der zu fördernden Münzen (48) nicht nebeneinander zwischen den Begrenzungsstegen (50) gehalten werden können.

11. Fördervorrichtung nach einem der vorhergehenden Ansprüche, **dadurch gekennzeichnet, dass** der mindestens eine Münzhaltesteg (46, 46') derart dimensioniert ist, dass die zwei dünnsten Münzen (48) der zu fördernden Münzen (48) nicht aufeinander durch den mindestens einen Münzhaltesteg (46, 46') gehalten werden können.

12. Fördervorrichtung nach einem der vorhergehenden Ansprüche, **dadurch gekennzeichnet, dass** der Kettengliedförderer (12) modular aufgebaut ist und/oder dass der Münzauslass (16) mindestens einen Sensor umfasst, ausgebildet zum Zählen und/oder Erkennen von durch den Münzauslass (16) ausgegebenen Münzen (48).

## Claims

1. A conveyor device for conveying coins (48) from a first level to a second, higher level, comprising a coin inlet (10) on the first level and a coin outlet (16) on the second level, and comprising an endless conveyor, driven by a drive (18), for conveying coins (48) from the coin inlet (10) to the coin outlet (16), wherein the endless conveyor is a chain conveyor (12) with a plurality of chain links (14, 14') connected to each other in an articulated manner, wherein the chain links (14, 14') each have at least one coin retaining web (46, 46'), which holds the coins (48) to be conveyed on the one hand counter to the conveying direction of the coins (48) from the first level to the second level and on the other hand transversely to the conveying direction on the respective chain link (14, 14'), **characterized in that** the at least one coin retaining web (46, 46') forms an undercut, by means of which the coins (48) to be conveyed are held.

2. The conveyor device according to claim 1, **characterized in that** the at least one coin retaining web (46, 46') has an L-shaped cross-section.

3. The conveyor device according to one of the preceding claims, **characterized in that** the chain links (14, 14') each have two coin retaining webs (46, 46'), which extend at an angle to one another.

4. The conveyor device according to claim 3, **characterized in that** the two coin retaining webs (46, 46') are arranged along a V-shape and are designed to hold coins (48) in the receptacle formed by the V-shape while they are being conveyed from the first level to the second level.

5. The conveyor device according to one of the preceding claims, **characterized in that** the chain links (14, 14') are each formed integrally with the at least one coin retaining web (46, 46') and/or **in that** the chain links (14, 14') are connected to each other in an articulated manner via a latching connection.

6. The conveyor device according to one of the preceding claims, **characterized in that** the coin inlet (10) has a bottom chute (30) for coins (48) supplied via the coin inlet (10).

7. The conveyor device according to claim 6, **characterized in that** an end of the bottom chute (30) that opens onto the chain conveyor (12) is designed non-perpendicularly to the conveying direction of the chain conveyor (12), preferably obliquely to the conveying direction or along a non-straight line.

8. The conveyor device according to one of the preceding claims, **characterized in that** the coin outlet (16) has a guide chute (32) for conveying coins (48) away from the chain conveyor (12).

9. The conveyor device according to one of the preceding claims, **characterized in that** the chain links (14, 14') each have at least one lateral boundary web (50) for laterally holding a coin (48) to be conveyed.

10. The conveyor device according to claim 9, **characterized in that** the chain links (14, 14') each have two opposingly arranged lateral boundary webs (50), which are spaced apart such that the two smallest coins (48) of the coins (48) to be conveyed cannot be held next to each other between the boundary webs (50).

11. The conveyor device according to one of the preceding claims, **characterized in that** the at least one coin retaining web (46, 46') is dimensioned such that the two thinnest coins (48) of the coins (48) to be conveyed cannot be held on top of each other by the at least one coin retaining web (46, 46').

12. The conveyor device according to one of the preceding claims, **characterized in that** the chain conveyor (12) is built modularly and/or **in that** the coin outlet (16) comprises at least one sensor designed to count and/or detect coins (48) ejected through the coin outlet (16).

## Revendications

1. Dispositif de transport pour le transport de pièces de monnaie (48) d'un premier niveau vers un deuxième niveau plus élevé, comportant une entrée de pièces de monnaie (10) au premier niveau et une sortie de pièces de monnaie (16) au deuxième niveau, et comportant un transporteur sans fin entraîné par un entraînement (18) pour le transport de pièces de monnaie (48) depuis l'entrée de pièces de monnaie (10) vers la sortie de pièces de monnaie (16), le transporteur sans fin étant un transporteur à maillons de chaîne (12) doté d'une pluralité de maillons de chaîne (14, 14') reliés entre eux de façon articulée, dans lequel
les maillons de chaîne (14, 14') présentent respectivement au moins une nervure de maintien de pièce de monnaie (46, 46'), laquelle maintient des pièces de monnaie (48) à transporter d'une part dans le sens opposé à une direction de transport des pièces de monnaie (48), depuis le premier niveau vers le deuxième niveau, et d'autre part transversalement à la direction de transport, au niveau du maillon de chaîne (14, 14') respectif, **caractérisé en ce que**
l'au moins une nervure de maintien de pièce de monnaie (46, 46') forme une contre-dépouille, par laquelle les pièces de monnaie (48) à transporter sont maintenues.

2. Dispositif de transport selon la revendication 1, **caractérisé en ce que** l'au moins une nervure de maintien de pièce de monnaie (46, 46') est conçue avec une section transversale en forme de L.

3. Dispositif de transport selon l'une des revendications précédentes, **caractérisé en ce que** les maillons de chaîne (14, 14') présentent respectivement deux nervures de maintien de pièce de monnaie (46, 46'), lesquelles s'étendent selon un angle l'une par rapport à l'autre.

4. Dispositif de transport selon la revendication 3, **caractérisé en ce que** les deux nervures de maintien de pièce de monnaie (46, 46') sont disposées le long d'une forme en V et sont conçues pour maintenir des pièces de monnaie (48) dans le logement formé par la forme en V pendant le transport depuis le premier niveau vers le deuxième niveau.

5. Dispositif de transport selon l'une des revendications précédentes, **caractérisé en ce que** les maillons de chaîne (14, 14') sont conçus respectivement d'un seul tenant avec l'au moins une nervure de maintien de pièce de monnaie (46, 46') et/ou **en ce que** les maillons de chaîne (14, 14') sont reliés entre eux de façon articulée par le biais d'une liaison à encliquetage.

6. Dispositif de transport selon l'une des revendications précédentes, **caractérisé en ce que** l'entrée de pièces de monnaie (10) présente une glissière de fond (30) pour des pièces de monnaie (48) alimentées par le biais de l'entrée de pièces de monnaie (10).

7. Dispositif de transport selon la revendication 6, **caractérisé en ce qu'**une extrémité de la glissière de fond (30) débouchant sur le transporteur à maillons de chaîne (12) est conçue de façon non perpendiculaire à la direction de transport du transporteur à maillons de chaîne (12), de préférence de façon oblique par rapport à la direction de transport ou le long d'une ligne non droite.

8. Dispositif de transport selon l'une des revendications précédentes, **caractérisé en ce que** la sortie de pièces de monnaie (16) présente une glissière de guidage (32) pour l'évacuation de pièces de monnaie (48) depuis le transporteur à maillons de chaîne (12).

9. Dispositif de transport selon l'une des revendications précédentes, **caractérisé en ce que** les maillons de chaîne (14, 14') présentent respectivement au moins une nervure de limitation latérale (50) pour le maintien latéral d'une pièce de monnaie (48) à transporter.

10. Dispositif de transport selon la revendication 9, **caractérisé en ce que** les maillons de chaîne (14, 14') présentent respectivement deux nervures de limitation latérales (50) disposées l'une en face de l'autre, lesquelles sont espacées de telle façon que les deux pièces de monnaie (48) les plus petites parmi les pièces de monnaie (48) à transporter ne peuvent pas être maintenues l'une à côté de l'autre entre les nervures de limitation (50).

11. Dispositif de transport selon l'une des revendications précédentes, **caractérisé en ce que** l'au moins une nervure de maintien de pièce de monnaie (46, 46') est dimensionnée de telle façon que les deux pièces de monnaie (48) les plus fines parmi les pièces de monnaie (48) à transporter ne peuvent pas être maintenues l'une sur l'autre par l'au moins une nervure de maintien de pièce de monnaie (46, 46').

12. Dispositif de transport selon l'une des revendications précédentes, **caractérisé en ce que** le transporteur à maillons de chaîne (12) est construit de façon modulaire et/ou **en ce que** la sortie de pièces de monnaie (16) comporte au moins un capteur, lequel est conçu pour compter et/ou pour détecter des pièces de monnaie (48) délivrées par la sortie de pièces de monnaie (16).
